# EUROPEAN PATENT SPECIFICATION

(11) **EP 2 553 041 B1**
(45) Date of publication and mention of the grant of the patent: **24.12.2014**
(21) Application number: 11715013.6
(22) Date of filing: 31.03.2011
(51) Int. Cl.: C09K 8/36, E21B 21/06

(54) **RECONDITIONING AND REUSE OF WELLBORE SERVICING FLUIDS**
AUFARBEITUNG UND WIEDERVERWENDUNG VON BOHRLOCHWARTUNGSFLÜSSIGKEITEN
RECONDITIONNEMENT ET RÉUTILISATION DE FLUIDES D'ENTRETIEN DE PUITS

(30) Priority: 31.03.2010 US 751793
(43) Date of publication of application: 06.02.2013
(73) Proprietor: Halliburton Energy Services, Inc., Duncan, OK 73536 (US)
(72) Inventor: HARVEY, Timothy Neal, Humble, Texas 77346 (US); MORRIS, Ronald G, The Woodlands, Texas 77382 (US); EZELL, Ryan, Spring, Texas 77386 (US)
(74) Representative: Cottrill, Emily Elizabeth Helen
(86) International application number: PCT/GB2011/000507
(87) International publication number: WO 2011/121314

(56) References cited:
- WO-A1-02/086280
- US-A1- 2004 209 781
- US-A1- 2008 061 003
- US-A1- 2008 217 065

## Description

### FIELD

The present disclosure generally relates to wellbore servicing fluids. More particularly, this disclosure relates to reconditioning and reusing wellbore servicing fluids via water removal.

### BACKGROUND

Wellbore Servicing Fluids (WSF), for example invert emulsions (i.e., whereas oil is the continuous or external phase and water is the discontinuous or internal phase), may be designed to have a specific aqueous or brine content. For example, a wellbore servicing fluid (e.g., an oil based, invert emulsion drilling fluid) with a targeted 5% water content (i.e., oil:water ratio = 95:5) may be employed in one or more wellbore servicing operations and at least a portion of the fluid may be recovered from the wellbore. The recovered fluid may have an increased water content that results in oil:water ratio that differs from the originally targeted water content and oil:water ratio. For example, the recovered drilling fluid may have a 20% water content (i.e., oil:water ratio = 80:20). It would be advantageous to reuse the recovered fluid, however, the fluid returned to the wellbore needs to be reconditioned back to the 5% water content specification before it can be used again.

Historically, reconditioning a WSF having a 80:20 Oil:Water Ratio to produce a 95:05 Oil:Water Ratio WSF has meant either chemically breaking the fluid into its constituent parts (oil, water, solids) and removing most of the water phase or diluting the 80:20 WSF with base oil and emulsifiers until the water proportion is within specifications. For example, dilution of 158991 (100 barrels (bbls)) of an WSF having an 80:20 oil:water ratio assuming 5% total solids by volume, with base oil to achieve an WSF having a 95:05 oil:water ratio, will require increasing the volume of base oil and emulsifier from 120831 (76 bbls) to 573941 (361 bbls); roughly a factor of 4.75, thereby incurring not only the expense of the additional fluid but the cost of the additional 453111 (285 bbls) of storage capacity. Thus, an ongoing need exists for systems and methods of reconditioning and reusing wellbore servicing fluids.

### SUMMARY

According to one aspect of the present invention, there is provided a method of servicing a wellbore comprising preparing a wellbore servicing composition having a target water content, placing the wellbore servicing composition in the wellbore, recovering from the wellbore a recovered wellbore servicing fluid having a modified, water content, wherein the modified water content is greater than the target water content, vacuum stripping water from the recovered wellbore servicing fluid to form a processed wellbore servicing fluid, wherein the processed wellbore servicing fluid has a water content less than the modified water content, and placing the processed wellbore servicing fluid in the same or a different wellbore.

A method of servicing a wellbore comprising: preparing a wellbore servicing composition having a target water content; placing the wellbore servicing composition in the wellbore; recovering from the wellbore a recovered wellbore servicing fluid having a modified water content, wherein the modified water content is greater than the target water content; vacuum stripping water from the recovered wellbore servicing fluid to form a processed wellbore servicing fluid, wherein the processed wellbore servicing fluid has a water content less than the modified water content; and placing the processed wellbore servicing fluid in the same or a different wellbore.

In an embodiment, the recovered wellbore servicing fluid is heated before the vacuum stripping. Suitably, the recovered wellbore servicing fluid is heated to a temperature of greater than ambient temperature and less than about 250°F (about 120°C). In an embodiment, the method further comprises increasing the surface area of the recovered wellbore servicing fluid during the vacuum stripping. The method may further comprise removing solids from the recovered wellbore servicing fluid, the processed wellbore servicing fluid, or both. In an embodiment, the recovered wellbore servicing fluid is an invert emulsion drilling fluid. In an embodiment, the target water content of from about 0 % to about 5% and wherein the modified water content is of from about 10% to about 40%.

In an embodiment, the method further comprises increasing the surface area of the recovered wellbore servicing fluid during the vacuum stripping.

In an embodiment, the method further comprises removing solids from the recovered wellbore servicing fluid, the processed wellbore servicing fluid, or both.

In an embodiment, the wellbore servicing fluid comprises an oleaginous fluid, and wherein the processed well bore servicing fluid comprises greater than about 90% of the oleaginous fluid present in the wellbore servicing fluid prior to being placed in the wellbore.

In an embodiment, the recovered wellbore servicing fluid comprises an invert emulsion.

In an embodiment, the recovered wellbore servicing fluid is a drilling fluid.

In an embodiment, the target water content of from about 0% to about 30% and wherein the modified water content is of from about 10% to about 40%.

In an embodiment, the vacuum pressure is from about 16932 Pa (5" of mercury) to about 101592 Pa (30" of mercury).

In an embodiment, the recovered wellbore servicing fluid is an invert emulsion drilling fluid, wherein drill cuttings are removed from the recovered wellbore servicing fluid prior to the vacuum stripping, and wherein the processed wellbore servicing fluid is returned to the same wellbore to continue drilling thereof The method may further comprise increasing the surface area of the recovered wellbore servicing fluid during the vacuum stripping.

In an embodiment, the vacuum of the vacuum stripping is provided by passing a portion of the recovered wellbore servicing fluid through an eductor. In an embodiment, the vacuum of the vacuum stripping is provided by passing a portion of the recovered wellbore servicing fluid through an eductor. Suitably, the vacuum stripping produces a gaseous stream, and wherein the method further comprises condensing the gaseous stream to form a condensate. The condensate may comprise water and one or more oleaginous fluids, and the method further comprise separating the water and the one or more oleaginous fluids.

In an embodiment, vacuum stripping is carried out a wellsite associated with the wellbore.

### BRIEF DESCRIPTION OF THE DRAWINGS

For a more complete understanding of the present disclosure and the advantages thereof, reference is now made to the following brief description, taken in connection with the accompanying drawings and detailed description:

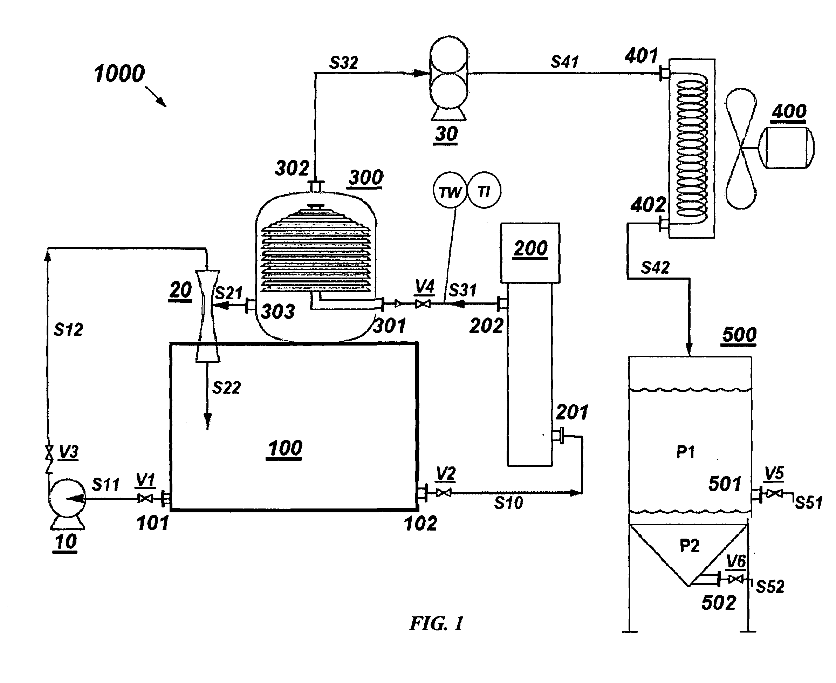

Figure 1 is a process flow diagram, wherein water is selectively removed from a wellbore servicing fluid, in accordance with one embodiment of the disclosure.

### NOTATION AND NOMENCLATURE

Certain terms are used throughout the following description and claims referencing particular system components. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either a direct connection or an indirect.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Disclosed herein are systems and methods for reconditioning and reusing WSF. In an embodiment, the WSF is recovered from a wellbore during and/or after a wellbore servicing operation such as drilling. Herein, reconditioning the WSF comprises adjusting the amount of at least one component in said WSF to a user and/or process desired value. In an embodiment, the 'at least one component comprises water and 'reconditioning' comprises adjusting the amount of water in the WSF. Methods and systems for adjusting the water content in a WSF are described herein in detail.

As used herein, a "wellbore servicing fluid" (WSF) or "servicing fluid" refers to a fluid used to drill, complete, work over, fracture, repair, or in any way prepare a wellbore for the recovery of materials residing in a subterranean formation penetrated by the wellbore. It is to be understood that "subterranean formation" encompasses both areas below exposed earth and areas below earth covered by water such as ocean or fresh water. Examples of WSFs include, but are not limited to, cement slurries, drilling fluids or muds, spacer fluids, fracturing fluids or completion fluids, all of which are well known in the art. In an embodiment, the WSF comprises drilling fluid, also referred to as drilling mud or mud. Alternatively, the WSF fluid consists essentially of a drilling fluid or mud.

Herein an emulsion refers to a mixture of two or more immiscible liquids where one liquid (the dispersed phase or the internal phase) is dispersed in the other (the continuous phase or the external phase). There are two major categories of emulsions - oil in water (OIW) emulsions and water in oil (WIO) emulsions (also referred to as invert emulsions), wherein oil in the general sense refers to a wide variety of non-aqueous fluids that are immiscible with water, e.g, hydrocarbons, fats, esters, etc. In this disclosure, "oil" is considered to mean the same as "oleaginous fluid." An oleaginous fluid herein refers to a non-aqueous composition which comprises hydrocarbons, olefins, internal olefin based oils, mineral oil, kerosene, diesel oil, fuel oil, synthetic oil, linear or branched paraffin, esters, acetals, mixtures of crude oil, derivatives thereof, or combinations thereof. In this disclosure, "emulsion" is used as a shorthand form of "invert emulsion" (or WIO emulsion) when used with respect to wellbore service unless otherwise specified.

In an embodiment, the WSF comprises an invert emulsion, for example an invert emulsion drilling fluid (e.g., an oleaginous fluid based, invert emulsion drilling fluid). Alternatively, the WSF fluid consists essentially of an invert emulsion, for example an invert emulsion drilling fluid. In an embodiment, the WSF is an oil-based mud, an OIW emulsion mud, or a WIO emulsion mud, each of which having some user defined amount of water contained therein.

The water present in the WSF may comprise fresh water, salt water (e.g., water containing one or more salts dissolved therein), brine, seawater, or combinations thereof. The WSF may be designed and formulated to have some user and/or process defined water content, hereinafter termed the targeted water content (WCₜ). In some embodiments, a WSF prior to use in a wellbore servicing operation may have a WCₜ in the range of from about 0% to about 30%, alternatively from about 5% to about 10%, alternatively from about 15% to about 30%, alternatively from about 0% to about 5%.

The WSF may be utilized in a wellbore servicing operation (e.g., drilling) and subsequently at least a portion of the WSF recovered and collected. Methods of using and recovering a WSF of the type described herein are known to one of ordinary skill in the art with the benefits of this disclosure. The WSF having been used in a wellbore servicing operation, recovered, and collected is hereinafter termed the recovered WSF. The water content of the recovered WSF may be analyzed using techniques as known in the art for the determination of water content and the water content of the recovered WSF is hereinafter denoted the modified water content (WCₘ). In an embodiment, WCₜ ≠ WCₘ. Alternatively, WCₜ is less than WCₘ. In an embodiment, the WCₘ is in a range of from about 10% to about 40%, alternatively from about 10% to about 20%, alternatively from about 20% to about 30%, alternatively from about 30% to about 40%. In an embodiment, the recovered WSF may be reconditioned so that the water content is adjusted to a desired value. In an embodiment, the WSF is reconditioned such that the WCₘ is about equal to the WCₜ.

In an embodiment, the WSF may contain additional components as known to one of ordinary skill in the art and compatible with one or more user and/or process desired needs. For example, the WSF may contain one or more emulsifiers. Such additives, their effective amounts, and methods of incorporation into the WSF are known to one of ordinary skill in the art with the benefits of this disclosure.

An embodiment, the recovered WSF is reconditioned via a system 1000 as shown in Figure 1. For example, a recovered WSF having a water phase content greater than some user and/or process desired value (i.e., WCₘ > WCₜ) may be reconditioned by removing water from the WSF with the aid of the system depicted in Figure 1. In one embodiment, system 1000 comprises storage tank 100, heater 200, vacuum degasser 300, condensor 400, condensate bin 500, pump 10, eductor 20, vacuum pump 30, and valves V1-V6.

Referring to Figure 1, in an embodiment, system 1000 comprises tank 100 which is in fluid communication with pump 10 via outlet 101, valve V1, and stream S11. Eductor 20 is in fluid communication with pump 10 via valve V3, stream S12, and inlet 21. Eductor 20 is in fluid communication with tank 100 through outlet 22 and feedstream S22. Eductor neck 23 is in fluid communication with vacuum degasser 300 via outlet 303 and stream S21 such that a vacuum condition is created in vacuum degasser 300. WSF is thus pulled into eductor 20 via outlet 303, stream S21 and neck 23 to be returned to tank 100. Tank 100 is in fluid communication with heater 200 via outlet 102, valve V2, stream S10, and inlet 201. Heater 200 is in fluid communication with vacuum degasser 300 via outlet 202, stream S31, control valve V4, Thermowell T-1 and inlet 301. Vacuum pump 30 is in fluid communication with degasser 300 via outlet 302 and stream S32 to convey the gaseous phase evaporated from the fluid in degasser 300. Vacuum pump 30 is also in fluid communication with condenser 400 via stream S41 and inlet 401. The cooled and condensed phase from heat exchanger 400 is conveyed through outlet 402 and stream S42 to condensate bin 500.

Referring to Figure 1, in an embodiment, a method of reconditioning a recovered WSF comprises introducing the recovered WSF to system 1000 via storage tank 100. Storage tank 100 may be any suitable vessel with a desired capacity to contain or store the recovered WSF. For example, storage tank 100 may be a fully or partially open top storage tank, or may be an enclosed storage tank having an inlet for receipt of a spent or recovered WSF. Pump 10 pulls the recovered WSF as stream S11 from storage tank 100 and outputs the fluid as stream S12 to eductor 20. The recovered WSF is then returned to storage tank 100 as stream S22. Valves V1 and V3 are utilized to control the flow rates of streams S11 and S12, respectively. In an embodiment, the eductor 20 creates negative pressure at neck 23 via the Venturi effect. It is the negative pressure created at eductor 20 which through the fluid outlet 303 of degasser 300 causes (1) a vacuum condition in degasser 300 and (2) the degassed fluid in degasser 300 to be returned to storage tank 100 via outlet 303 and stream S21.

In an embodiment, a second stream S10 comprising the recovered WSF is conveyed from storage tank 100 via outlet 102 and valve V2 to inlet port 201 which is fluidly coupled to heater 200. In some embodiments, a pump is utilized to facilitate this process Heater 200 may be any suitable vessel with one or more heating elements that can provide a desired heating capacity for the WSF. In some cases, heater 200 comprises an electric heating element. In other instances, heater 200 may be designed specifically to function in system 1000. In such instances, heater 200 may have been designed so as to not exceed a pre-determined temperature range. The heating element may have an adjustable current requirement in the range of from about 100 Amps to about 600 Amps, alternatively from about 100 to about 200 Amps, alternatively from about 200 Amps to about 300 Amps, alternatively from about 300 Amps to about 600 Amps. In some cases, heater 200 comprises a tube-and-shell heat exchanger. The recovered WSF may then be heated in heater 200 to a temperature that is higher than the boiling point of water under the vacuum conditions of degasser 300 and lower than the degradation temperature of one or more components of the recovered WSF. In some cases, the temperature of the recovered WSF is elevated to at or below the atmospheric boiling point of water. Alternatively, the temperature of the recovered WSF is elevated in heater 200 to a temperature in the range of from about 80°C to about 250°C (from about 27°C to about 120°C), alternatively from about 80°C to about 100°C (from about 27°C to about 38°C), alternatively from about 180°F to about 250°F (from about 82°C to about 120°C). Alternatively, the temperature of the recovered WSF is elevated to a temperature that facilitates removal of water from the fluid while minimizing the degradation of the components of the fluid. Herein the water is said to be "stripped" from the fluid using the aforementioned process. The processes disclosed herein may result in the low temperature distillation of water from the recovered WSF. The recovered WSF once conveyed through heater 200 is hereinafter termed the heated recovered WSF

Valves V2 and V4 are utilized to control the flow rates of streams S10 and S31, respectively. The flow rates of S10 and S31 are adjusted in coordination with the heating rate of recovered WSF in heater 200 so that the temperature of the heated recovered WSF (e.g., stream S31) is maintained in the desired range. For example, if the temperature of stream S31 exceeds the highest desired temperature, the flow rates of WSF streams S10 and S31 are increased so that the residence time of the WSF in heater 200 is reduced to decrease the temperature of stream S31. Alternatively or additionally, the energy level of heater 200 may be reduced to decrease its heating rate and thus decrease the temperature of stream S31. A Thermowell and thermometer T1 may be used to monitor the temperature of the fluid which in turn allows for control of the fluid temperature to the vacuum degasser 300.

The heated recovered WSF exits heater 200 via outlet port 202 and stream S31 and enters degasser 300 via valve V4 and inlet 301. Vacuum degasser 300 comprises fluid inlet 301, fluid outlet 303 and gas outlet 302. Any suitable vessel or chamber that can provide adequate vacuum and surface area for fluid degassing may be used, such as a vacuum flash dryer. Vacuum degasser 300 is capable of providing a vacuum condition in the range of from about 16932 Pa (5" of mercury) to about 101592 Pa (30" of mercury).

In some embodiments, heated recovered WSF is thinly spread in degasser 300 using film spreading mechanism (FSM) 320 which is disposed within degasser 300. FSM 320 may comprise a series of open chambers or a plurality of flow plates so that the heat recovered WSF fluid that is conveyed to the degasser through inlet 301 is thinly spread on FSM 320 to facilitate the removal of water vapor from the heated recovered WSF. The FSM provides an increased surface area over which the heated recovered WSF may be applied thus facilitating the flash vaporization of the water present in the fluid. In an embodiment, the FSM 320 has a surface area of from about 1.42 sq meters (2200 sq in.) to about 9.37 sq meters (14,528 sq. in.), alternatively from about 1.42 sq meters (2200 sq in.) to about 4.69 sq meters (7264 sq. in.), alternatively from about 4.52 sq meters (7000 sq. in.) to about 9.37 sq meters (14,528 sq. in.) FSM 320 may spread the recovered heated WSF to a layer thickness of from about 1 mm to about 18 mm, alternatively from about 1mm to about 4mm, alternatively from about 4mm to about 10mm, alternatively from about 10mm to about 18mm. With the aid of this disclosure, one skilled in the art will be able to conceive many configurations as equivalents of the FSM disclosed herein. Therefore, these equivalents are considered to be within the scope of this disclosure.

Under vacuum condition and/or above the boiling point of water, water in the heated recovered WSF evaporates and becomes a gaseous product in degasser 300. This gaseous product when subjected to the action of vacuum pump 30 exits degasser 300 via outlet 302 as stream S32 which is conveyed via vacuum pump 30 as stream S41 into heat exchanger 400. Stream S41 comprises evaporated water and lower molecular weight oleaginous components removed from the heated recovered WSF and is condensed when subjected to the action of heat exchanger 400 and exits as stream S42 via outlet 402. Hereinafter, the water and lower molecular weight oleaginous components that have been removed from the heated recovered WSF (i.e., the contents of stream S42) are collectively termed the condensate.

Referring again to Figure 1, stream S42 comprising the condensate is then conveyed to condensate bin 500 for liquid-liquid separation. The lower molecular weight oleaginous components become the lighter phase P1 in condensate bin 500 while the water becomes the heavier phase P2 in condensate bin 500. The lower molecular weight oleaginous components (i.e., P1) may be removed from condensate bin 500 via outlet 501, valve V5, and stream S51. In an embodiment, the lower molecular weight oleaginous components are reused for any suitable purpose. Water (i.e., P2) may be removed from condensate bin 500 via outlet 502, valve V6, and stream S52. Stream S52 contains distilled water, which may be disposed of or used for other suitable purposes.

Returning to degasser 300 in Figure 1, the degassed fluid (or the residue WSF) from degasser 300 enters eductor 20 as stream S21. Stream S21 which comprises a heated recovered WSF having the reduced water content may be conveyed from the degasser 300 via stream S21 to storage tank 100. Herein, at least a portion of the recovered WSF having been conveyed from storage tank 100, subjected to heating element 200 and degasser 300 and returned to storage tank 100 is said to have been subjected to a water removal cycle. In an embodiment, the water content of the fluid in storage tank 100 may be reduced after each cycle. In an embodiment, all or a portion of stream S21 is not returned to tank 100 and not mixed with unreconditioned, recovered WSF but rather is reused as a wellbore servicing fluid or as component of a wellbore servicing fluid, for example by mixing with other components or mixing with like, virgin material. For example, all or a portion of stream S21 may be directed to a separate storage tank (or separate compartment within tank 100) containing reconditioned WSF, which may then be reused in the wellbore as a wellbore servicing fluid or as a component of a wellbore servicing fluid, provided that the water content of the reconditioned WSF is within specification as described herein. In an alternative embodiment, the reconditioned WSF is subjected to multiple reconditioning cycles (e.g., sequentially, continuously, batch processed) until the water content of the reconditioned WSF is within specification.

In an embodiment, the method for reconditioning a recovered WSF further comprises determining the water content of the reconditioned WSF (e.g., in storage tank 100 or a separate storage tank or compartment) at least once following treatment by one or more water removal cycles and/or after operating reconditioning system 1000 for a given period of time (e.g., continuous operation for a given treatment time). The water content may be determined manually by obtaining a sample of the fluid in storage tank 100 and determining the water content of the sample using techniques as known to one of ordinary skill in the art. Alternatively, determination of the water content of the fluid in storage tank 100 may be automated. For example, system 1000 may comprise a device for monitoring the water content of the fluid present in storage tank 100. In an embodiment, the recovered WSF is subjected to any number of water removal cycles and/or processed for a period of time effective to obtain a water content that meets some user and/or process desired value. The recovered WSF having been subjected to a process of tube type described herein and having a user and/or process desired water content is hereinafter referred to as a processed WSF (PRO-WSF).

In some embodiments, system 1000 may comprise a plurality of the aforementioned components as is desired to fulfill some user and/or process objective. For example, system 1000 may comprise a plurality of vacuum degassers which may be employed in series or in parallel to reduce the water content of a recovered WSF emulsion to the desired value. Alternatively, a plurality of water removal systems (e.g., system 1000) may be used in series or in parallel as is desired to fulfill some user and/or process objective. These configurations are all considered to be equivalents of the disclosed system.

The recovered WSF and/or PRO-WSF may comprise a variety of solid components. Such components may have been introduced during the original formulation of the WSF or may have become associated with the WSF during its use in servicing a wellbore. Examples of solids which may be present in the WSF include without limitation precipitated salts, down-hole residues, solid additives, drill cuttings, and other commercial materials. In some embodiments, solid-liquid separation is carried out on the recovered WSF before it is placed in tank 100, while the recovered WSF is present in tank 100 (e.g., separation equipment is integrated into/with tank 100), and/or after the recovered WSF is removed from tank 100. Solid-liquid separation may be carried out using any technique and/or device as known in the art and compatible with the PRO-WSF. For example, the solid-liquid separation may comprise the use of screens, centrifuges and/or filtration devices. In an embodiment, tank 100 serves as a settling tank and is equipped with solids removal equipment at or near the bottom of tank 100. In an embodiment, the PRO-WSF is further processed by being subjected to a solid-liquid separation technique. In some embodiments, the PRO-WSF is subjected to a solid-liquid separation technique in temporal proximity to production of the PRO-WSF. In such embodiments, the kinematic viscosity of the PRO-WSF is reduced in part due to the elevated temperature of the fluid thus facilitating the subsequent solid-liquid separation. As such temporal proximity refers to a time period for which the PRO-WSF maintains a temperature above that of the surrounding environment. In an embodiment, the PRO-WSF is subjected to a solid-liquid separation technique after the fluid temperature has equilibrated to that of the surrounding environment. In such embodiments, the PRO-WSF may have a reduced viscosity when compared to the recovered WSF due to a reduced water content. In such embodiments, the reduced kinematic viscosity of the oleaginous fluid plus the reduced viscosity of the PRO-WSF will both contribute to facilitate solid-liquid separation. In an embodiment, the PRO-WSF after being subjected to a solid-liquid separation technique has a solids content that is reduced to an average particle size of less than 3 microns, alternatively less than about 1.2x10⁻⁴ inches. The PRO-WSF when subjected to a solid-liquid separation technique is hereinafter termed the reconditioned WSF (RECON-WSF).

In an embodiment as shown in Fig. 1, a RECON-WSF is prepared by operating system 1000 in a batch mode. In such an embodiment, a quantity of recovered WSF introduced to the system is subjected to the water removal cycles and/or processing time until a user and/or process defined water content is achieved. The fluid is then removed from system 1000, solids are removed (if not already removed prior to and/or concurrent with water stripping), and another quantity of recovered WSF introduced to the system 1000. In an alternative embodiment, the system 1000 is configured to operate in a continuous fashion wherein quantities of a recovered WSF are continuously introduced to the system 1000, subjected to one or more water removal cycles or an effective residence time within the system 1000, and subsequently continuously removed from the system 1000. Again, solids may be removed before, during, and/or after water stripping in system 1000.

The methods described herein may be carried out manually, may be automated, or may be combinations of manual and automated processes. In an embodiment, the method is implemented via a computerized apparatus, wherein the method described herein is implemented in software on a general purpose computer or other computerized component having a processor, user interface, microprocessor, memory, and other associated hardware and operating software. Software implementing the method may be stored in tangible media and/or may be resident in memory on the computer. Likewise, input and/or output from the software, for example ratios, comparisons, and results, may be stored in a tangible media, computer memory, hardcopy such a paper printout, or other storage device.

In an embodiment, the PRO-WSF and/or RECON-WSF is used as a wellbore servicing fluid or as a component of a wellbore servicing fluid. In an embodiment, the PRO-WSF and/or RECON-WSF is supplemented with one or more additives and/or virgin, like WSF to meet some user and/or process desire need prior to use in servicing a wellbore.

In some embodiments, preparation of the PRO-WSF and/or RECON-WSF as described herein occurs adjacent the wellbore that the WSF serviced and from with the WSF was recovered, thus eliminating the need of transporting a recovered WSF to a remote site. In an embodiment, reconditioning of the recovered WSF as described herein takes place at a central processing unit, such as a liquid mud plant. In an embodiment, the mud plant serves a plurality of wellbores located within a given region, locality, field, or formation.

In an embodiment, a recovered WSF subjected to the processes described herein is converted to a PRO-WSF and/or RECON-WSF having a user and/or process desired water content. The methodologies disclosed herein may advantageously reduce the water content of a recovered WSF while having a negligible impact on the other components of the recovered WSF. In an embodiment the recovered WSF comprises an ester-based fluid and the PRO-WSF and/or RECON-WSF retains greater than 90%, alternatively greater than 91%, 92%, 93%, 94%, 95%, 96%, 97%, 98% or 99% of the ester component of the recovered WSF. The methods and systems described herein for the removal of water from a recovered WSF may be carried out in conjunction with, in addition to, or in lieu of other processes for the removal of water from a recovered WSF. Such processes may comprise for example chemical treatment of the recovered WSF. In an embodiment, the processes disclosed herein for the removal of water from a recovered WSF are carried out in the absence of chemical treatment of the recovered WSF. Further, the methods and systems disclosed herein provide an environmental benefit in that waste streams of the methods disclosed comprise centrifuged solids and water either of which may be disposed of or reused for a suitable purpose.

### EXAMPLES

The disclosure having been generally described, the following examples are given as particular embodiments of the disclosure and to demonstrate the practice and advantages thereof. It is understood that the examples are given by way of illustration and are not intended to limit the specification or the claims in any manner.

### PROPHETIC EXAMPLE 1

A drilling fluid comprising an invert emulsion with an oil:water ratio of 95:5 may be used in a wellbore servicing operation at a wellsite and subsequently a portion of the fluid recovered. The recovered wellbore servicing fluid may be analyzed for water content and found to have an oil:water ratio of 80:20. The recovered fluid may be transferred to a facility capable of reconditioning the recovered fluid. The facility may be located at the wellsite or may be remote from the wellsite. The recovered fluid may be subjected to a water removal system and processes of the type described herein and the reconditioned fluid may have an oil:water ratio of 95:5. The reconditioned fluid may then be transferred to a wellbore servicing site and subsequently employed in a wellbore servicing operation.

While embodiments of the disclosure have been shown and described, modifications thereof can be made by one skilled in the art without departing from the teachings of the disclosure. The embodiments described herein are exemplary only, and are not intended to be limiting. Many variations and modifications of the disclosure disclosed herein are possible and are within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, R_{L}, and an upper limit, R_{U}, is disclosed, any number falling within the range is specifically disclosed. In particular, the following numbers within the range are specifically disclosed: R=R_{L}+k*(Rᵤ-R_{L}), wherein k is a variable ranging from 1 percent to 100 percent with a 1 percent increment, i.e., k is 1 percent, 2 percent, 3 percent, 4 percent, 5 percent, ..., 50 percent, 51 percent, 52 percent, ..., 95 percent, 96 percent, 97 percent, 98 percent, 99 percent, or 100 percent. Moreover, any numerical range defined by two R numbers as defined in the above is also specifically disclosed. Use of the term "optionally" with respect to any element of a claim is intended to mean that the subject element is required, or alternatively, is not required. Both alternatives are intended to be within the scope of the claim. Use of broader terms such as comprises, includes, having, etc. should be understood to provide support for narrower terms such as consisting of, consisting essentially of, comprised substantially of, etc.

Accordingly, the scope of protection is not limited by the description set out above but is only limited by the claims which follow, that scope including all equivalents of the subject matter of the claims. Each and every claim is incorporated into the specification as an embodiment of the present disclosure. Thus, the claims are a further description and are an addition to the embodiments of the present disclosure. The discussion of a reference is not an admission that it is prior art to the present disclosure, especially any reference that may have a publication date after the priority date of this application.

## Claims

1. A method of servicing a wellbore comprising:
preparing a wellbore servicing composition having a target water content, wherein the wellbore servicing fluid comprises an invert emulsion;
placing the wellbore servicing composition in the wellbore;
recovering from the wellbore a recovered wellbore servicing fluid having a modified water content, wherein the modified water content is greater than the target water content;
vacuum stripping water from the recovered wellbore servicing fluid to form a processed wellbore servicing fluid, wherein the processed wellbore servicing fluid has a water content less than the modified water content; and
placing the processed wellbore servicing fluid in the same or a different wellbore.

2. A method according to claim 1, wherein the recovered wellbore servicing fluid is heated before the vacuum stripping.

3. A method according to claim 1 or 2, wherein the recovered wellbore servicing fluid is heated to a temperature of greater than ambient temperature and less than 120°C (250°F).

4. A method according to claim 1, 2 or 3, further comprising increasing the surface area of the recovered wellbore servicing fluid during the vacuum stripping.

5. A method according to any preceding claim, further comprising removing solids from the recovered wellbore servicing fluid, the processed wellbore servicing fluid, or both.

6. A method according to any preceding claim, wherein the wellbore servicing fluid comprises an oleaginous fluid, and wherein the processed wellbore servicing fluid comprises greater than 90% of the oleaginous fluid present in the wellbore servicing fluid prior to being placed in the wellbore.

7. A method according to any preceding claim, wherein the recovered wellbore servicing fluid is a drilling fluid.

8. A method according to any preceding claim, wherein the target water content is of from 0% to 30% and wherein the modified water content is of from 10% to 40%.

9. A method according to claim 8, wherein the target water content is of from 0 % to 5% and wherein the modified water content is of from 10% to 40%.

10. A method according to any preceding claim, wherein the vacuum pressure is from 16932 Pa (5" of mercury) to 101592 Pa (30" of mercury).

11. A method according to claim 7, wherein drill cuttings are removed from the recovered wellbore servicing fluid prior to the vacuum stripping, and wherein the processed wellbore servicing fluid is returned to the same wellbore to continue drilling thereof.

12. A method according to any preceding claim, wherein the vacuum of the vacuum stripping is provided by passing a portion of the recovered wellbore servicing fluid through an eductor.

13. A method according to claim 12, wherein the vacuum stripping produces a gaseous stream, and wherein the method further comprises condensing the gaseous stream to form a condensate.

14. A method according to claim 13, wherein the condensate comprises water and one or more oleaginous fluids, and the method further comprises separating the water and the one or more oleaginous fluids.

15. A method according to any preceding claim, wherein vacuum stripping is carried out a wellsite associated with the wellbore.

## Patentansprüche

1. Verfahren zur Wartung eines Bohrlochs, umfassend:
Aufbereiten einer Bohrlochwartungszusammensetzung, die einen Zielwassergehalt aufweist, wobei die Bohrlochwartungsflüssigkeit eine Invertemulsion umfasst;
Platzieren der Bohrlochwartungszusammensetzung in das Bohrloch;
Aufbereiten einer aus dem Bohrloch wiedergewonnenen Bohrlochwartungsflüssigkeit, die einen modifizierten Wassergehalt aufweist, wobei der modifizierte Wassergehalt größer als der Zielwassergehalt ist;
Vakuumstrippen von Wasser aus der wiedergewonnenen Bohrlochwartungsflüssigkeit, um eine verarbeitete Bohrlochwartungsflüssigkeit zu bilden, wobei die verarbeitete Bohrlochwartungsflüssigkeit einen geringeren Wassergehalt als der modifizierte Wassergehalt aufweist; und
Platzieren der verarbeiteten Bohrlochwartungsflüssigkeit in das gleiche oder ein verschiedenes Bohrloch.

2. Verfahren nach Anspruch 1, wobei die wiedergewonnene Bohrlochwartungsflüssigkeit vor dem Vakuumstrippen erwärmt wird.

3. Verfahren nach Anspruch 1 oder 2, wobei die wiedergewonnene Bohrlochwartungsflüssigkeit auf eine Temperatur erwärmt wird, die höher als die Umgebungstemperatur und niedriger als 120 °C (250 °F) ist.

4. Verfahren nach Anspruch 1, 2 oder 3, das ferner das Vergrößern der Oberfläche der wiedergewonnenen Bohrlochwartungsflüssigkeit, während des Vakuumstrippens, umfasst.

5. Verfahren nach einem beliebigen vorangehenden Anspruch, das ferner das Entfernen von Feststoffen aus der wiedergewonnenen Bohrlochwartungsflüssigkeit, der verarbeiteten Bohrlochwartungsflüssigkeit oder beiden umfasst.

6. Verfahren nach einem beliebigen vorangehenden Anspruch, wobei die Bohrlochwartungsflüssigkeit eine ölige Flüssigkeit umfasst und, wobei die verarbeitete Bohrlochwartungsflüssigkeit mehr als 90 % der öligen Flüssigkeit umfasst, die in der Bohrlochwartungsflüssigkeit zugegen ist, bevor diese in das Bohrloch platziert wird.

7. Verfahren nach einem beliebigen vorangehenden Anspruch, wobei die wiedergewonnene Bohrlochwartungsflüssigkeit eine Bohrspülung ist.

8. Verfahren nach einem beliebigen vorangehenden Anspruch, wobei der Zielwassergehalt von 0 % bis 30 % ist und, wobei der modifizierte Wassergehalt von 10 % bis 40 % ist.

9. Verfahren nach Anspruch 8, wobei der Zielwassergehalt von 0 % bis 5 % ist und, wobei der modifizierte Wassergehalt von 10 % bis 40 % ist.

10. Verfahren nach einem beliebigen vorangehenden Anspruch, wobei der Vakuumdruck von 16932 Pa (5 Zoll Quecksilber) bis 101592 Pa (30 Zoll Quecksilber) reicht.

11. Verfahren nach Anspruch 7, wobei Bohrklein vor dem Vakuumstrippen aus der wiedergewonnenen Bohrlochwartungsflüssigkeit entfernt wird und, wobei die verarbeitete Bohrlochwartungsflüssigkeit in das gleiche Bohrloch rückgeführt wird, um mit dessen Bohren fortzufahren.

12. Verfahren nach einem beliebigen vorangehenden Anspruch, wobei das Vakuum des Vakuumstrippens mittels Leiten eines Teils der wiedergewonnenen Bohrlochwartungsflüssigkeit durch eine Ejektorpumpe bereitgestellt wird.

13. Verfahren nach Anspruch 12, wobei das Vakuumstrippen einen gasförmigen Strom produziert und, wobei das Verfahren ferner das Kondensieren des gasförmigen Stroms umfasst, um ein Kondensat zu bilden.

14. Verfahren nach Anspruch 13, wobei das Kondensat Wasser und eine oder mehrere ölige Flüssigkeiten umfasst und das Verfahren ferner das Trennen des Wassers und der einen oder mehreren öligen Flüssigkeiten umfasst.

15. Verfahren nach einem beliebigen vorangehenden Anspruch, wobei das Vakuumstrippen an einem mit dem Bohrloch assoziierten Bohrplatz ausgeführt wird.

## Revendications

1. Procédé d'entretien d'un puits consistant à :
préparer une composition d'entretien de puits ayant une teneur cible en eau, le fluide d'entretien de puits comprenant une émulsion inverse ;
placer la composition d'entretien de puits dans le puits ;
récupérer à partir du puits un fluide d'entretien de puits récupéré ayant une teneur modifiée en eau, la teneur modifiée en eau étant plus importante que la teneur cible en eau ;
extraire l'eau sous vide à partir du fluide d'entretien de puits récupéré pour former un fluide d'entretien de puits traité, le fluide d'entretien de puits traité ayant une teneur en eau inférieure à la teneur modifiée en eau ; et
placer le fluide d'entretien de puits traité dans le même puits ou dans un autre puits.

2. Procédé selon la revendication 1, dans lequel le fluide d'entretien de puits récupéré est chauffé avant l'extraction sous vide.

3. Procédé selon la revendication 1 ou 2, dans lequel le fluide d'entretien de puits récupéré est chauffé jusqu'à une température supérieure à la température ambiante et inférieure à 120 °C (250 °F).

4. Procédé selon la revendication 1, 2 ou 3, consistant en outre à augmenter la surface du fluide d'entretien de puits récupéré au cours de l'extraction sous vide.

5. Procédé selon l'une quelconque des revendications précédentes, consistant en outre à éliminer les matières solides du fluide d'entretien de puits récupéré, du fluide d'entretien de puits traité, ou des deux.

6. Procédé selon l'une quelconque des revendications précédentes, dans lequel le fluide d'entretien de puits comprend un fluide oléagineux, et dans lequel le fluide d'entretien de puits traité comprend plus de 90 % du fluide oléagineux présent dans le fluide d'entretien de puits avant d'être placé dans le puits.

7. Procédé selon l'une quelconque des revendications précédentes, dans lequel le fluide d'entretien de puits récupéré est un fluide de forage.

8. Procédé selon l'une quelconque des revendications précédentes, dans lequel la teneur cible en eau est comprise entre 0 % et 30 % et dans lequel la teneur modifiée en eau est comprise entre 10 % et 40 %.

9. Procédé selon la revendication 8, dans lequel la teneur cible en eau est comprise entre 0 % et 5 % et dans lequel la teneur modifiée en eau est comprise entre 10 % et 40 %.

10. Procédé selon l'une quelconque des revendications précédentes, dans lequel la pression sous vide est comprise entre 16 932 Pa (5 pouces de mercure) et 101 592 Pa (30 pouces de mercure).

11. Procédé selon la revendication 7, dans lequel les déblais de forage sont éliminés du fluide d'entretien de puits récupéré avant l'extraction sous vide, et dans lequel le fluide d'entretien de puits traité est renvoyé dans le même puits pour en continuer le forage.

12. Procédé selon l'une quelconque des revendications précédentes, dans lequel le vide de l'extraction sous vide est assuré par le passage d'une partie du fluide d'entretien de puits récupéré à travers un éjecteur.

13. Procédé selon la revendication 12, dans lequel l'extraction sous vide produit un courant gazeux, et dans lequel le procédé consiste en outre à condenser le courant gazeux pour former un condensat.

14. Procédé selon la revendication 13, dans lequel le condensat comprend de l'eau et un ou plusieurs fluides oléagineux, et le procédé consiste en outre à séparer l'eau et le ou plusieurs fluides oléagineux.

15. Procédé selon l'une quelconque des revendications précédentes, dans lequel l'extraction sous vide est réalisée sur un site de puits associé au puits.
